# EUROPÄISCHE PATENTSCHRIFT

(11) **EP 3 953 297 B1**
(45) Veröffentlichungstag und Bekanntmachung des Hinweises auf die Patenterteilung: **07.05.2025**
(21) Anmeldenummer: 19716081.5
(22) Anmeldetag: 19.03.2019
(51) Int. Cl.: C01B 3/50, B01D 53/22, B01D 53/32

(54) **VERFAHREN ZUR ABTRENNUNG VON WASSERSTOFF AUS GASGEMISCHEN**
METHOD FOR SEPARATING HYDROGEN FROM GAS MIXTURES
PROCÉDÉ POUR SÉPARER L'HYDROGÈNE DE MÉLANGES GAZEUX

(30) Priorität: 20.03.2018 AT 742018
(43) Veröffentlichungstag der Anmeldung: 16.02.2022
(73) Patentinhaber: Technische Universität Wien, 1040 Wien (AT)
(72) Erfinder: LIEMBERGER, Werner, 3021 Pressbaum (AT); HARASEK, Michael, 1160 Wien (AT); MILTNER, Martin, 3034 Maria Anzbach (AT)
(74) Vertreter: Ellmeyer, Wolfgang
(86) Internationale Anmeldenummer: PCT/EP2019/056863
(87) Internationale Veröffentlichungsnummer: WO 2019/180032

(56) Entgegenhaltungen:
- DE-A1- 102012 015 021
- US-A1- 2010 243 475
- US-A1- 2014 332 405
- LIEMBERGER WERNER ET AL: "Experimental analysis of membrane and pressure swing adsorption (PSA) for the hydrogen separation from natural gas", JOURNAL OF CLEANER PRODUCTION, ELSEVIER, AMSTERDAM, NL, vol. 167, 5 August 2017 (2017-08-05), pages 896 - 907, XP085180761, ISSN: 0959-6526, DOI: 10.1016/J.JCLEPRO.2017.08.012
- IBEH ET AL: "Separation of hydrogen from a hydrogen/methane mixture using a PEM fuel cell", INTERNATIONAL JOURNAL OF HYDROGEN ENERGY, ELSEVIER SCIENCE PUBLISHERS B.V., BARKING, GB, vol. 32, no. 7, 5 May 2007 (2007-05-05), pages 908 - 914, XP022060124, ISSN: 0360-3199, DOI: 10.1016/J.IJHYDENE.2006.11.017

## Beschreibung

Die vorliegende Erfindung betrifft ein Verfahren zur Abtrennung und Verdichtung von Wasserstoff aus Gasgemischen.

### STAND DER TECHNIK

Die Gewinnung von Wasserstoff aus H₂-hältigen Gasgemischen ist in zahlreichen Bereichen der Technik von essentieller Bedeutung. Speziell die Gewinnung von Reinwasserstoff aus einem Erdgasnetz ist ein für die Zukunft der umweltschonend(er)en Mobilität unter Einsatz von mit Wasserstoffverbrennungsmotoren oder Brennstoffzellen angetriebenen Fahrzeugen viel versprechender Ansatz. Zu diesem Zweck ist es erforderlich, den Wasserstoff möglichst rein und kostengünstig, d.h. energieeffizient, hauptsächlich von Methan, aber auch anderen im Erdgasnetz enthaltenen Gasen, wie z.B. niederen Kohlenwasserstoffen (v.a. von Ethan bis Butan), N₂ und CO₂, abzutrennen.

Wasserstoff wird großindustriell primär via Dampfreformierung aus Erdgas und Wasserdampf produziert. Aus dem produzierten wasserstoffhaltigen Gas muss anschließend der Wasserstoff abgetrennt werden. Dafür sind zahlreiche Verfahren bekannt und großteils seit vielen Jahren im Einsatz. Großindustriell wird dies via Druckwechseladsorption ("pressure swing adsorption", PSA) oder eine kryogene Trennung realisiert. Eine Druckwechseladsorption ist apparativ ein aufwändiges Verfahren, da mehrere zyklisch arbeitende Adsorber (Behälter) inklusive vieler Ventile notwendig sind, was mit hohen Investitionskosten verbunden ist. Dennoch handelt es sich um ein Standardverfahren für die Bereitstellung hochreiner Gase. Bei der kryogenen Trennung wird das Gasgemisch teilweise verflüssigt und anschließend getrennt. Die Temperaturabsenkung ist jedoch sehr energie- und kostenintensiv.

Neben den beiden Trennverfahren etabliert sich zunehmend die Membrantrenntechnik mittels wasserstoffselektiver Membranen, speziell für kleinere Anlagen aufgrund ihrer hohen Flexibilität, guten Skalierbarkeit, Energieeffizienz und Einfachheit (geringer apparativer und regelungstechnischer Aufwand). In Liemberger et al., Chem. Eng. Trans. 52, 427-432 (2016), offenbart die Arbeitsgruppe der vorliegenden Erfinder eine Kombination aus Membrantrennung und PSA zur Abtrennung von Wasserstoff aus Erdgas. Im ersten Schritt wird mittels Membrantrenntechnik ein Teilstrom mit erhöhter Wasserstoffkonzentration aus dem Erdgasnetz entnommen. Im Zuge der nachfolgenden Druckwechseladsorption wird die erforderliche hohe Wasserstoffproduktgasqualität sichergestellt. Das restliche Gas wird auf Leitungsdruck verdichtet und in das Erdgasnetz zurückgespeist. In Liemberger et al., J. Clean. Prod. 167, 896-907 (2017), wird experimentell die technische Machbarkeit der Technologie dargestellt.

In jüngerer Zeit wurden auch Verfahren unter Verwendung elektrochemischer Protonenaustauschmembranen ("proton exchange membranes", PEM) beschrieben, in denen der Wasserstoff bei Eintritt in die Membran zu Protonen oxidiert und beim Austritt wieder zu molekularem Wasserstoff reduziert wird. In diesem Zusammenhang offenbaren beispielsweise Friebe et al., Angew. Chem. Int. Ed. Engl. 54(27), 7790-7794 (2015), eine "invertierte Brennstoffzelle", mittels der Wasserstoff in einer handelsüblichen PEM-Brennstoffzelle unter Anlegung einer elektrischen Spannung aus einem Abgasgemisch abgetrennt werden kann, während die WO 2014/207388 A1 einen mehrstufigen "elektrochemischen Kompressor" offenbart.

US2014 332405 A1 offenbart ein verbessertes Verfahren zur Erhöhung der Wasserstoffrückgewinnung in einer Wasserstoffproduktionsanlage umfassend eine Druckwechseladsorption (PSA) und eine elektrochemische Membrantrennung, wobei der Abgasstrom aus der PSA der elektrochemische Membran zugeführt wird, um Wasserstoff zu gewinnen, der mit dem wasserstoffreichen Strom aus der PSA kombiniert wird.

Nachteilig ist an dieser Kombination aus Membrantrennung und Druckwechseladsorption jedoch der hohe apparative Aufwand und die damit verbundenen hohen Investitionskosten, die vor allem durch die Druckwechseladsorption bedingt sind. Ein weiterer Nachteil ist die Anzahl der notwendigen Kompressoren, sowie deren Energieverbrauch.

Ziel der Erfindung war vor diesem Hintergrund die Bereitstellung eines verbesserten Verfahrens zum Erhalt von Reinwasserstoff, durch das Wasserstoff in hoher Reinheit von > 99,97 % (was hierin als "im Wesentlichen rein" bezeichnet wird) unter möglichst niedrigem Energieaufwand erhalten wird.

### OFFENBARUNG DER ERFINDUNG

Dieses Ziel erreicht die vorliegende Erfindung durch Bereitstellung eines Verfahrens zur Abtrennung und Verdichtung von Wasserstoff aus H₂-hältigen Gasgemischen unter Verwendung von Membrantrennverfahren, das dadurch gekennzeichnet ist, dass
a) das H₂-hältige Gasgemisch zunächst in an sich bekannter Weise zumindest einem Membrantrennschritt unter Verwendung zumindest einer H₂-selektiven Polymermembran (unterzogen wird, wobei zumindest ein an H₂ angereichertes Permeat erhalten wird;
b) das so erhaltene Permeat anschließend bis zu einem definierten Feuchtigkeitsgrad befeuchtet wird;
c) das befeuchtete Gasgemisch danach einem Trennschritt mittels einer Protonen-transportierenden elektrochemischen Membran unter gleichzeitiger Druckerhöhung unterzogen wird, um ein im Wesentlichen nur H₂ und H₂O umfassendes Permeat zu erhalten; und
d) dieses Permeat zumindest einem Trocknungsschritt, ausgewählt aus Kondensation und Membrantrocknung unterzogen wird, um einen im Wesentlichen reinen Wasserstoff umfassenden Gasstrom zu erhalten.

Durch diese bislang unbekannte Kombination zweier unterschiedlicher Membrantrennschritte, d.h. von Gasmembranen und elektrochemischen Membranen, unter zusätzlicher zwischenzeitlicher Befeuchtung und abschließender Trocknung gelingt es völlig überraschenderweise, Wasserstoff in einer äußerst hohen Reinheit von praktisch 100 %, nämlich von > 99,99 Vol.-%, aus einem nur 4 Vol.-% Wasserstoff enthaltenden Erdgasstrom, z.B. aus einem Erdgasnetz, zu erhalten.

Wie die späteren Beispiele anhand von bevorzugten Ausführungsformen belegen, kann nach diesem Verfahren ein H₂-Produktstom erhalten werden, in dem nur geringfügigste Spuren an H₂O und keinerlei CH₄ mehr enthalten sind. Gleichzeitig wird zudem ein Methan-Strom mit einer Reinheit von bis zu 99,9 % erhalten, der problemlos wieder in das Erdgasnetz einspeisbar ist.

In solchen bevorzugten Ausführungsformen der Erfindung wird das H₂-hältige Gasgemisch in Schritt a) zumindest zum Teil, vorzugsweise jedoch zur Gänze, zwei Membrantrennschritten unter Verwendung zweier H₂-selektiver Polymermembranen unterzogen, wobei zumindest ein Teil des Permeats der ersten Membran, vorzugsweise das gesamte Permeat, als Feed einer zweiten Membran zugeführt wird und das Permeat des zweiten Trennschritts dem Befeuchtungsschritt zugeführt wird. Auf diese Weise gelingt es, den Anteil an Wasserstoff im Retentat (der zweiten Membrantrennstufe), d.h. im Off-Strom, der in der Praxis ins Erdgasnetz zurückgeleitet werden kann, zu minimieren. In den Beispielen wurde dadurch eine im Methan enthaltene Restmenge an H₂ von nur 5 ppm erzielt.

Weiter wird in bevorzugten Ausführungsformen das Permeat des elektrochemischen Membrantrennschritts c) sowohl einer Trocknung mittels Kondensator als auch mittels einer dritten, H₂O-selektiven Membran unterzogen, um den oben genannten äußerst geringen H₂O-Anteil zu erzielen. Als Kondensatoren kommen alle herkömmlichen Kondensationstrockner in Frage, wobei jedoch vorzugsweise Rohrbündel- oder Plattenwärmetauscher mit geeigneter Kondensatausschleusung zum Einsatz kommen.

Gemäß vorliegender Erfindung werden in Schritt a) als H₂-selektive Polymermembranen in der Regel die derzeit gängigen, handelsüblichen, hochselektiven aromatischen Polyimidmembranen eingesetzt werden, wobei jedoch in Zukunft möglicherweise auch Keramikmembranen diesen Zweck erfüllen könnten, sofern es in den nächsten Jahren gelingt, die derzeit bekannten mechanischen Stabilitätsprobleme zu beseitigen um sie für einen Dauerbetrieb geeignet zu machen.

In Schritt c) wird als Protonen-transportierende elektrochemische Membran vorzugsweise eine Nafion-Membran, noch bevorzugter mit einem Edelmetall-Katalysator, insbesondere einem Platin-Katalysator eingesetzt, wie dies prinzipiell bekannt ist, um hohe Durchsätze durch die elektrochemische Membran zu erzielen.

Auch in Schritt d) können in der Membrantrocknungsstufe durchaus handelsübliche H₂O-selektive Membranen eingesetzt werden, vorzugsweise auch in diesem Fall aromatische Polyimidmembranen, die mit hohen Selektivitäten kommerziell erhältlich sind.

Zusammengenommen bedeutet dies, dass für die Praxis der vorliegenden Erfindung keine neuartigen Membranen vonnöten, sondern in sämtlichen Schritten durchaus handelsübliche Produkte einsetzbar sind. Umso überraschender waren die hierin in den Beispielen offenbarten konkreten Ergebnisse.

Laut Erdgasnetzregulierungen darf Erdgas nur eine sehr geringe Restfeuchtigkeit aufweisen. Sofern Wasserdampf im Erdgasnetz vorhanden ist, wird dieser zwar im ersten Membrantrennschritt zusammen mit dem Wasserstoff angereichert, allerdings wird dabei das für die elektrochemische Membran erforderliche Feuchtigkeitslevel nicht erreicht. Daher wird in Schritt b) des erfindungsgemäßen Verfahrens das Gasgemisch vorzugsweise bis zu einem Feuchtigkeitsgrad befeuchtet, der zumindest 40 %, noch bevorzugter zumindest 50 %, insbesondere zumindest 60 % und nicht mehr als 99 %, der relativen Feuchte bei der jeweiligen Temperatur des Gasgemischs entspricht. Dadurch wird ein ungestörter Betrieb der Protonen-transportierenden elektrochemischen Membran selbst bei hohen Durchsätzen gewährleistet.

Die Art und Weise der Befeuchtung ist dabei nicht speziell eingeschränkt und kann beispielsweise mittels Eindüsung von Wasserdampf oder mittels einer eigenen Befeuchtungsmembran erfolgen.

Zur Gewährleistung einer stabilen und sicheren Betriebsweise der elektrochemischen Membran spielt das Wassermanagement eine entscheidende Rolle, da i) bei einer zu geringen relativen Feuchtigkeit der Transportprozess durch die Membran nicht in gewünschter Weise funktioniert und ii) bei einer zu hohen relativen Feuchtigkeit die Gefahr des Flutens der Membran besteht. Dadurch steigt der auf den Produktwasserstoff bezogene spezifische Energieverbrauch.

Weiters wird gemäß vorliegender Erfindung bevorzugt, dass das im Trocknungsschritt d) abgetrennte Wasser zum Befeuchtungsschritt b) rezykliert wird, was den Wasserverbrauch minimiert und im Idealfall gegen null senkt.

### KURZBESCHREIBUNG DER ZEICHNUNGEN

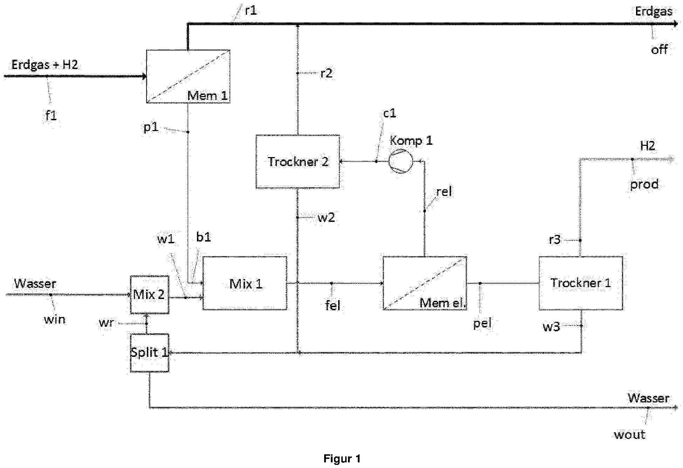

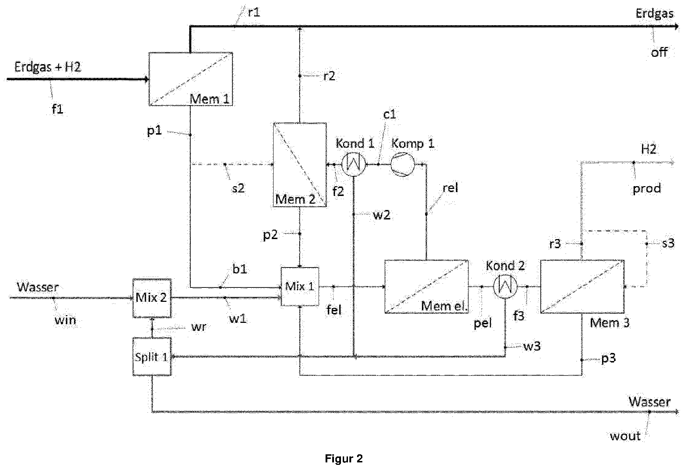

In Fig. 1 ist eine vereinfachte Verfahrensführung der vorliegenden Erfindung schematisch dargestellt. In Fig. 2 sind etwas aufwändigere Verfahrensführungen gemäß bevorzugten Ausführungsformen der vorliegenden Erfindung schematisch dargestellt, in denen der Trocknungsschritt d) durch eine Kombination aus Kondensator und Trocknungsmembran ausgeführt wurde. Mehrere derartige Ausführungsformen wurden in den folgenden Beispielen computersimuliert und durchgerechnet.

### BEISPIELE

Nachstehend wird die vorliegende Erfindung anhand von konkreten Beispielen im Detail beschrieben. Dabei handelt es sich um eine Computersimulation des im jeweiligen Beispiel gewählten Verfahrensablaufs unter den folgenden allgemeinen Grundbedingungen:
Ausgangsfeed f1: Erdgasstrom aus 96 Vol.-% Methan und 4 Vol.-% Wasserstoff mit einem Druck von 51 bar und einer Temperatur von 300 K; 0,725 m³/h bzw. 725 m³/h.

### Allgemeiner Überblick

In den Beispielen 1 bis 3 wurde angenommen, dass aus einem sehr schwachen Volumenstrom (0,73 m³/h; siehe Tabelle 4) eines H₂-hältigen Erdgasfeeds f1 in einer ersten Membrantrennstufe Mem_1 ein wasserstoffangereicherter Permeatstrom p1 abgetrennt wird. Das restliche Gas, Retentat r1, wird auf Leitungsdruckniveau gehalten und mit dem aus dem Prozess anfallenden, aus nahezu reinem Methan bestehenden (Retentat-) Strom r2 zusammengeführt, bevor es in das Erdgasnetz zurückgeleitet wird. Daher muss darauf geachtet werden, dass die Gesamtfeuchtigkeit dieses kombinierten, zu rezyklierenden Stroms, des Stroms "off", vor der Rückeinspeisung den Kriterien der Netzregulierung entspricht, wozu der in Fig. 1 dargestellte Trockner_2 vorgesehen ist.

Das Permeat p1 aus Mem_1 wird entweder als Eingangsstrom b1 einem Mischer Mix_1 zugeführt, wo es mit einer definierten Menge an Wasserdampf teilgesättigt wird (Fig. 1), oder p1 wird zumindest teilweise als Sweepgasstrom s2 einer zweiten Membrantrennstufe Mem_2 zugeführt. Das dort entstehende Permeat p2 wird dann ebenfalls - zusammen mit dem Rest von p1 oder anstelle von p1 - zur Befeuchtung dem Mischer Mix_1 zugeführt (Fig. 2).

Das befeuchtete Gas wird anschließend als Feed fel der elektrochemischen Membrantrennstufe Mem_el zugeführt. In dieser Trennstufe wird der Hauptteil des Wasserstoffs inklusive eines Teils der Feuchtigkeit als Permeat pel abgetrennt und gleichzeitig, je nach Ausführungsart, verdichtet. Das restliche Gas verlässt die elektrochemische Membran Mem_el als Retentat rel mit demselben Druckniveau.

Um die notwendigen Produktgasqualitäten zu erreichen, muss das Permeat pel getrocknet werden, wofür Trockner_1 (Fig. 1) bzw. Kondensator Kond_2 (Fig. 2) vorgesehen ist. Das abgetrennte Wasser kann anschließend wieder zurückgeführt und als Wasserstrom w3 erneut dem Prozess zugeführt werden.

Das Retentat rel der elektrochemischen Membrantrennstufe muss auf Erdgasleitungsdruckniveau verdichtet werden, wofür in allen Ausführungsformen der Kompressor Komp_1 vorgesehen ist. Außerdem muss es gegebenenfalls auch getrocknet werden, bevor es in das Erdgasnetzwerk rückeingespeist werden darf. Dafür ist in Fig. 1 Trockner_2 und in Fig. 2 der Kondensator Kond_1 vorgesehen. Das hier anfallende Wasser kann ebenfalls, als Wasserstrom w2, im Prozess wiederverwendet werden. Beide rückgeführten Wasserströme w2 und w3 können vereinigt und einem Stromteiler Spilt_1 zugeführt werden, von wo sie entweder aus dem Prozess entfernt (wout) oder als Wasserrezyklatstrom wr in einem Mischer Mix_2 gegebenenfalls mit von außen eingespeisten Wasser win vermischt, jedenfalls aber als Strom w1 dem Befeuchter (Fig. 1) bzw. Mischer Mix_1 (Fig. 2) zugeführt werden können.

Das Feuchtigkeitsmanagement spielt für den Prozess eine entscheidende Rolle. Daher ist vorgesehen, dass anfänglich bzw. zusätzliches Wasser von außen eingebracht werden kann (Wassereingangsstrom win) oder überschüssiges abgezogen werden kann (Wasserausgangsstrom wout). Somit kann flexibel auf den Feuchtigkeitsbedarf reagiert werden.

Neben der einfachsten Prozessführung aus Fig. 1 mit nur einer Gasmembrantrennstufe Mem_1 ist in Fig. 2 als bevorzugte Ausführungsform der Erfindung eine Alternative mit zwei zusätzlichen Gasmembrantrennungen (Mem_2 und Mem_3) angegeben. Bei beiden Trennstufen steht die Feuchtigkeitsrückgewinnung im Vordergrund. Allerdings kann für den Fall, dass durch die elektrochemische Membran Mem_el nicht der gesamte Wasserstoff abgetrennt wurde, kann zumindest ein Teil des in deren Retentat rel enthaltenen Wasserstoffs mittels Mem_2 abgetrennt und dem Prozess erneut zugeführt werden. Dies erhöht die Gesamtprozessausbeute an Wasserstoff. Zur weiteren Ausbeutenoptimierung sind für Mem_2 und Mem_3 jeweils optionale Sweepgasströme s2, s3 vorgesehen. Wie aus Fig. 2 ersichtlich, kann hierfür beispielsweise ein Teil des Produktgas-Retentatstroms r3 aus Mem_3 als Sweepstrom s3 erneut der Membran Mem_3 zugeführt werden.

### Beispiel 1

Dieses - wie auch die Beispiele 2 bis 6 - in Fig. 2 schematisch dargestellte Beispiel basiert auf der Annahme, dass das Permeat p1 aus der ersten Membranstrufe Mem_1 zur Gänze als Sweepstrom s2 einer zweiten Membrantrennstufe Mem_2 zugeführt wird, bevor das dabei erhaltene zweite Permeat p2 im Mischer Mix_1 befeuchtet wird.

Der in Mix_1 mit dem Permeat p1 vermischte Wasserdampf wird nur anfänglich von außen zugesetzt. Im laufenden Betrieb wird jedoch ein Großteil des benötigten Wassers aus dem Kondensator Kond_2 und gegebenenfalls aus dem Kondensator Kond_1 rezykliert. Durch diese Wiederverwendung der "Hilfsfeuchtigkeit" wird der Frischwasserbedarf des Prozesses stark reduziert.

Das in Mix_1 befeuchtete, an H₂ angereicherte Gasgemisch wird in der Folge als Feed fel der elektrochemischen Membran Mem_el zugeführt, wo der Wasserstoff H₂ zu Protonen H⁺ oxidiert, in Protonenform durch die Membran geleitet und bei Austritt aus derselben als Permeat pel wieder zu H₂ reduziert wird.

Dieses Permeat wird zunächst einem Kondensator Kond_2 zugeführt, in dem eine erste Trocknung mittels Kondensation des im H₂-Strom enthaltenen Wasserdampfs erfolgt. Das dabei anfallende Wasser fällt als Strom w3 an, der an einem Stromteiler Split_1 entweder als rezyklierter Strom wr einem weiteren Mischer Mix_2 zugeführt wird, wo er entweder mit einem externen Wasser-Feed win vermischt werden oder ohne äußere Wassereinspeisung direkt als Strom w1 erneut in den Mischer Mix_1 eingeleitet werden kann, um den Bedarf an Frischwasser weiter zu senken, oder im Bedarfsfall auch an Split_1 als Strom wout verworfen werden kann. Sowohl im vorliegenden Beispiel 1 als auch im folgenden Beispiel 2 wurde angenommen, dass - abgesehen von einer anfänglichen Frischwassereinspeisung - der Bedarf an Wasser im Prozess zur Gänze durch Rezyklierung der beiden Kondensatströme w3 und w2 gedeckt werden kann.

Der im Kondensator Kond_2 getrocknete, bereits nahezu reine H₂-Gasstrom f3 wird in dieser bevorzugten Ausführungsform der Erfindung einer weiteren Gasmembrantrennung unter Verwendung einer H₂O-selektiven Membran Mem_3 unterzogen, wobei der nun praktisch zu 100%ig reine Wasserstoff hier als Retentat r3 anfällt und als Produktgasstrom prod gewonnen werden kann. Für den Fall, dass die Feuchtigkeit im Retentat r3 zu hoch ist, kann die Trenneffizienz der Membrantrennstufe Mem_3 erhöht werden, indem ein Teilstrom des Produkts als Sweepgasstrom s3 abgetrennt wird. Das so abgetrennte Gasgemisch aus Wasserstoff und geringfügigen Anteilen an Wasserdampf, wird dem Prozess erneut zugeführt. Im vorliegenden Beispiel 1 wurde diese Optimierungsmaßnahme getroffen, wie aus den Werten in Tabelle 1 ersichtlich ist.

Weiters kann in bevorzugten Ausführungsformen der Erfindung das Retentat rel der elektrochemischen Membrantrennstufe einem Kompressor Komp_1 und in der Folge als verdichteter Strom c1 einem Kondensator Kond_1 zugeführt werden, wo es getrocknet und als Feed f2 in die zweite Membrantrennstufe Mem_2 eingeleitet wird, um die Gesamtprozessausbeute an H₂ zu erhöhen. Das im Kondensator Kond_1 anfallende Wasser wird als Strom w2 ebenfalls dem Stromteiler Split_1 zugeführt und gegebenenfalls rezykliert. Dies wurde im vorliegenden Beispiel 1 ebenso berücksichtigt wie auch eine Rezyklierung des Permeats p3 der dritten Gasmembrantrennstufe Mem_3 zu Mix_1, um es erneut der elektrochemischen Trennung an Mem_el zu unterziehen.

Aus den in Tabelle 1 aufgelisteten Ergebnissen dieser Ausführungsform der Erfindung - mit einem zur Gänze in Mem_2 neuerlich getrennten Permeat aus Mem_1 - ist zu erkennen, dass mit dieser Verfahrensführung ein Großteil des in f1 enthaltenen Wasserstoffs, nämlich rund 71 %, erhalten durch die Rechnung (n_{H2} im Strom f1 / n_{H2} im Strom prod) x 100, kontinuierlich abgetrennt und gewonnen werden kann.

**Tabelle 1 - Bilanzierungsdaten zu Beispiel 1**

| | **H₂** | | **CH₄** | | **H₂O** | | **SUMME** | |
|---|---|---|---|---|---|---|---|---|
| | **n mol/s** | **x** | **n mol/s** | **x** | **n mol/s** | **x** | **n mol/s** | **x** |
| | | | | | | | | |
| Strom | | | | | | | | |
| **f1** | 3,60E-04 | 4,00E-02 | 8,64E-03 | 9,60E-01 | 6,93E-07 | 7,70E-05 | 9,00 E-03 | 1 |
| **win** | | | | | 1,50E-06 | 1,00E+00 | 1,50E-06 | 1 |
| **prod** | 2,54E-04 | 1,00E+00 | | | 2,34E-09 | 9,21E-06 | 2,54E-04 | 1 |
| **off** | 1,06E-04 | 1,22E-02 | 8,64E-03 | 9,88E-01 | 4,52E-08 | 5,17E-06 | 8,75E-03 | 1 |
| **r1** | 1,04E-04 | 1,22E-02 | 8,42E-03 | 9,88E-01 | 3,93E-08 | 4,61E-06 | 8,52E-03 | 1 |
| **p1** | 2,56E-04 | 5,37E-01 | 2,20E-04 | 4,62E-01 | 6,54E-07 | 1,37E-03 | 4,77E-04 | 1 |
| **s2** | 2,56E-04 | 5,37E-01 | 2,20E-04 | 4,62E-01 | 6,54E-07 | 1,37E-03 | 4,77E-04 | 1 |
| **b1** | | | | | | | | |
| **w1** | | | | | 1,08E-05 | 1,00E+00 | 1,08E-05 | 1 |
| **fel** | 3,93E-04 | 6,29E-01 | 2,20E-04 | 3,52E-01 | 1,16E-05 | 1,85E-02 | 6, 25 E-04 | 1 |
| **pel** | 2,95E-04 | 1,00E+00 | | | 1,23E-07 | 4,18E-04 | 2,95E-04 | 1 |
| **rel** | 9,84E-05 | 2,98E-01 | 2,20E-04 | 6,67E-01 | 1,14E-05 | 3,47E-02 | 3,30E-04 | 1 |
| **f3** | 2,95E-04 | 1,00E+00 | | | 4,53E-08 | 1,54E-04 | 2,95E-04 | 1 |
| **w3** | | | | | 7,81E-08 | 1,00E+00 | 7,81E-08 | 1 |
| **r3** | 2,54E-04 | 1,00E+00 | | | 2,34E-09 | 9,21E-06 | 2,54E-04 | 1 |
| **s3** | 2,54E-08 | 1,00E+00 | | | 2,34E-13 | 9,21E-06 | 2,54E-08 | 1 |
| **p3** | 4,14E-05 | 9,97E-01 | | | 1,21E-07 | 2,92E-03 | 4,15E-05 | 1 |
| **wr** | | | | | 9,32E-06 | 1,00E+00 | 9,32E-06 | 1 |
| **c1** | 9,84E-05 | 2,98E-01 | 2,20E-04 | 6,67E-01 | 1,14E-05 | 3,47E-02 | 3,30E-04 | 1 |
| **w2** | | | | | 1,08E-05 | 1,00E+00 | 1,08E-05 | 1 |
| **f2** | 9,84E-05 | 3,09E-01 | 2, 20 E-04 | 6,91E-01 | 5,07E-08 | 1,59E-04 | - 3,19E-04 | 1 |
| **r2** | 2,34E-06 | 1,05E-02 | 2,20E-04 | 9,89E-01 | 5,98E-09 | 2,69E-05 | 2,22E-04 | 1 |
| **p2** | 3,52E-04 | 6,15E-01 | 2,20E-04 | 3,84E-01 | 6,99E-07 | 1,22E-03 | 5,73E-04 | 1 |
| **wout** | | | | | 2,15E-06 | 1,00E+00 | 2,15E-06 | 1 |
| | **Wasserbedarf** | | | | | -6,47E-07 | **mol/s** | |
| | **Zirkulierendes Wasser** | | | | | 1,09E-05 | **mol/s** | |
| | **Zirkulierendes Wasser bezogen auf Feed** | | | | | 0,12 | % | |
| | **Zirkulierendes Wasser bezogen auf Produkt** | | | | | 4,30 | % | |
| | **Relative Feuchte in fel** | | | | | 52,06 | % | |
| | **Relative Feuchte in pel** | | | | | 60,00 | % | |
| | **Relative Feuchte in rel** | | | | | 97,58 | % | |
| | **H2 Ausbeute der elektrochemischen Membrane** | | | | | 75 | % | |
| | **H2 Gesamtausbeute** | | | | | 70,47 | % | |
| | **Spezifischer Energieverbrauch** | | | | | 0,72 | **kWh/m³** | |

### Beispiel 2

Hier wurde im Gegensatz zu Beispiel 1 - bei gleicher Verfahrensführung - eine größere Membranfläche für die erste Gasmembrantrennstufe Mem_1 und eine kleinere Fläche für die zweite Stufe Mem_2 angenommen (siehe die nachstehende Tabelle 4). Durch diese Vergrößerung der Fläche von Mem_1 ist es möglich, noch mehr Wasserstoff aus dem Erdgasnetz zu gewinnen, der anschließend aufgereinigt wird, was die Gesamtausbeute deutlich, nämlich auf rund 93 % erhöht. Da jedoch auch mehr Methan durch die erste Membrantrennstufe Mem_1 transportiert wird, muss dieses rückverdichtet werden, wodurch der Gesamtenergieverbrauch steigt. Zudem wird eine größere zirkulierende Wassermenge benötigt. Der übrige Verfahrensverlauf war identisch zu Beispiel 1 und ist ebenfalls Fig. 2 zu entnehmen.

**Tabelle 2 - Bilanzierungsdaten zu Beispiel 2**

| | **H₂** | | **CH₄** | | **H₂O** | | **SUMME** | |
|---|---|---|---|---|---|---|---|---|
| | **n mol/s** | **x** | **n** | **x** | **n mol/s** | **x** | **n mol/s** | **x** |
| | | | **mol/s** | | | | | |
| Strom | | | | | | | | |
| **f1** | 3,60E-04 | 4,00E-02 | 8,64E-03 | 9,60E-01 | 6,93E-07 | 7,70E-05 | 9,00E-03 | 1 |
| **win** | | | | | 3,00E-06 | 1,00E+00 | 3,00E-06 | 1 |
| **prod** | 3,34E-04 | 1,00E+00 | | | 8,06E-09 | 2,41E-05 | 3,34E-04 | 1 |
| **off** | 2,59E-05 | 2,99E-03 | 8,64E-03 | 9,97E-01 | 8,56E-09 | 9,88E-07 | 8,67E-03 | 1 |
| **r1** | 2,20E-05 | 2,69E-03 | 8,15E-03 | 9,97E-01 | 4,49E-10 | 5,49E-08 | 8,17E-03 | 1 |
| **p1** | 3,38E-04 | 4,07E-01 | 4,92E-04 | 5,92E-01 | 6,93E-07 | 8,34E-04 | 8,31E-04 | 1 |
| **s2** | 3,38E-04 | 4,07E-01 | 4,92E-04 | 5,92E-01 | 6,93E-07 | 8,34E-04 | 8,31E-04 | 1 |
| **b1** | | | | | | | | |
| **w1** | | | | | 1,86E-05 | 1,00E+00 | 1,86E-05 | 1 |
| **fel** | 5,01E-04 | 4,95E-01 | 4,92E-04 | 4,86E-01 | 1,94E-05 | 1,92E-02 | 1,01E-03 | 1 |
| **pel** | 3,75E-04 | 1,00E+00 | | | 1,57E-07 | 4,18E-04 | 3,76E-04 | 1 |
| **rel** | 1,25E-04 | 1,97E-01 | 4,92E-04 | 7,73E-01 | 1,93E-05 | 3,03E-02 | 6,37E-04 | 1 |
| **f3** | 3,75E-04 | 1,00E+00 | | | 5,77E-08 | 1,54E-04 | 3,76E-04 | 1 |
| **w3** | | | | | 9,94E-08 | 1,00E+00 | 9,94E-08 | 1 |
| **r3** | 3,34E-04 | 1,00E+00 | | | 8,06E-09 | 2,41E-05 | 3,34E-04 | 1 |
| **s3** | 3,34E-08 | 1,00E+00 | | | 8,06E-13 | 2,41E-05 | 3,34E-08 | 1 |
| **p3** | 4,14E-05 | 9,96E-01 | | | 1,49E-07 | 3,59E-03 | 4,15E-05 | 1 |
| **wr** | | | | | 1,56E-05 | 1,00E+00 | 1,56E-05 | 1 |
| **c1** | 1,25E-04 | 1,97E-01 | 4,92E-04 | 7,73E-01 | 1,93E-05 | 3,03E-02 | 6,37E-04 | 1 |
| **w2** | | | | | 1,86E-05 | 1,00E+00 | 1,86E-05 | 1 |
| **f2** | 1,25E-04 | 2,03E-01 | 4,92E-04 | 7,97E-01 | 9,77E-08 | 1,58E-04 | 6,17E-04 | 1 |
| **r2** | 3,96E-06 | 7,98E-03 | 4,92E-04 | 9,92E-01 | 8,11E-09 | 1,64E-05 | 4,96E-04 | 1 |
| **p2** | 4,59E-04 | 4,82E-01 | 4,92E-04 | 5,17E-01 | 7,83E-07 | 8,22E-04 | 9,52E-04 | 1 |
| **wout** | | | | | 3,68E-06 | 1,00E+00 | 3,68E-06 | 1 |
| | **Wasserbedarf** | | | | | -6,78E-07 | **mol/s** | |
| | **Zirkulierendes Wasser** | | | | | 1,87E-05 | **mol/s** | |
| | **Zirkulierendes Wasser bezogen auf Feed** | | | | | 0,21 | % | |
| | **Zirkulierendes Wasser bezogen auf Produkt** | | | | | 5,61 | % | |
| | **Relative Feuchte in fel** | | | | | 53,98 | % | |
| | **Relative Feuchte in pel** | | | | | 60,00 | % | |
| | **Relative Feuchte in rel** | | | | | 85,14 | % | |
| | **H₂-Ausbeute der elektrochemischen Membran** | | | | | 75 | % | |
| | **H₂-Gesamtausbeute** | | | | | 92,80 | % | |
| | **Spezifischer Energieverbrauch** | | | | | 0,87 | **kWh/m³** | |

### Beispiel 3

Zum Unterschied zu den beiden vorangegangen Beispielen wurde die Membranfläche der ersten Gastrennmembran Mem_1 weiter und damit zum größten Wert in den Beispielen 1 bis 3 erhöht (siehe Tabelle 4). Die Membranfläche der zweiten Membran Mem_2 wurde im Vergleich zu Beispiel 1 ebenfalls deutlich vergrößert. Durch die größeren Flächen wird die Trennung weniger selektiv, allerdings zugunsten der Ausbeute an H₂, was sich positiv auf die Gesamtausbeute auswirkt, die auf rund 96 % gesteigert wird. Freilich steigt dadurch - vor allem aufgrund der geringeren Selektivität der ersten Membrantrennstufe Mem_1 - der Gesamtenergiebedarf weiter an. Wie auch in Beispiel 2 steigt zudem die Menge an zirkulierendem Wasser. Der übrige Verfahrensverlauf war allerdings identisch zu den Beispielen 1 und 2 und ist ebenfalls Fig. 2 zu entnehmen.

**Tabelle 3 - Bilanzierungsdaten zu Beispiel 3**

| | **H₂** | | **CH₄** | | **H₂O** | | **SUMME** | |
|---|---|---|---|---|---|---|---|---|
| | **n** | **x** | **n mol/s** | **x** | **n mol/s** | **x** | **n mol/s** | **x** |
| | **mol/s** | | | | | | | |
| Strom | | | | | | | | |
| **f1** | 3,60E-04 | 4,00E-02 | 8,64E-03 | 9,60E-01 | 6,93E-07 | 7,70E-05 | 9,00E-03 | 1 |
| **win** | | | | | 3,00E-06 | 1,00E+00 | 3,00E-06 | 1 |
| **prod** | 3,46E-04 | 1,00E+00 | | | 9,23E-09 | 2,67E-05 | 3,46E-04 | 1 |
| **off** | 1,44E-05 | 1,66E-03 | 8,64E-03 | 9,98E-01 | 8,77E-09 | 1,01E-06 | 8,65E-03 | 1 |
| **r1** | 9,96E-06 | 1,24E-03 | 8,02E-03 | 9,99E-01 | 4,01E-11 | 4,99E-09 | 8,03E-03 | 1 |
| **p1** | 3,50E-04 | 3,62E-01 | 6,16E-04 | 6,37E-01 | 6,93E-07 | 7,17E-04 | 9,67E-04 | 1 |
| **s2** | 3,50E-04 | 3,62E-01 | 6,16E-04 | 6,37E-01 | 6,93E-07 | 7,17E-04 | 9,67E-04 | 1 |
| **b1** | | | | | | | | |
| **w1** | | | | | 2,33E-05 | 1,00E+00 | 2,33E-05 | 1 |
| **fel** | 5,16E-04 | 4,46E-01 | 6,16E-04 | 5,33E-01 | 2,42E-05 | 2,09E-02 | 1,16E-03 | 1 |
| **pel** | 3,87E-04 | 1,00E+00 | | | 1,62E-07 | 4,18E-04 | 3,87E-04 | 1 |
| **rel** | 1,29E-04 | 1,68E-01 | 6,16E-04 | 8,01E-01 | 2,40E-05 | 3,12E-02 | 7,69E-04 | 1 |
| **f3** | 3,87E-04 | 1,00E+00 | | | 5,95E-08 | 1,54E-04 | 3,87E-04 | 1 |
| **w3** | | | | | 1,02E-07 | 1,00E+00 | 1,02E-07 | 1 |
| **r3** | 3,46E-04 | 1,00E+00 | | | 9,23E-09 | 2,67E-05 | 3,46E-04 | 1 |
| **s3** | 3,46E-08 | 1,00E+00 | | | 9,23E-13 | 2,67E-05 | 3,46E-08 | 1 |
| **p3** | 4,14E-05 | 9,96E-01 | | | 1,53E-07 | 3,67E-03 | 4,15E-05 | 1 |
| **wr** | | | | | 2,03E-05 | 1,00E+00 | 2,03E-05 | 1 |
| **c1** | 1,29E-04 | 1,68E-01 | 6,16E-04 | 8,01E-01 | 2,40E-05 | 3,12E-02 | 7,69E-04 | 1 |
| **w2** | | | | | 2,33E-05 | 1,00E+00 | 2,33E-05 | 1 |
| **f2** | 1,29E-04 | 1,73E-01 | 6,16E-04 | 8,27E-01 | 1,18E-07 | 1,58E-04 | 7,45E-04 | 1 |
| **r2** | 4,40E-06 | 7,10E-03 | 6,16E-04 | 9,93E-01 | 8,73E-09 | 1,41E-05 | 6,20E-04 | 1 |
| **p2** | 4,75E-04 | 4,35E-01 | 6,16E-04 | 5,64E-01 | 8,03E-07 | 7,35E-04 | 1,09E-03 | 1 |
| **wout** | | | | | 3,67E-06 | 1,00E+00 | 3,67E-06 | 1 |
| | **Wasserbedarf** | | | | | -6,72E-07 | **mol/s** | |
| | **Zirkulierendes Wasser** | | | | | 2,35E-05 | **mol/s** | |
| | **Zirkulierendes Wasser bezogen auf Feed** | | | | | 0,26 | % | |
| | **Zirkulierendes Wasser bezogen auf Produkt** | | | | | 6,80 | % | |
| | **Relative Feuchte in fel** | | | | | 58,86 | % | |
| | **Relative Feuchte in pel** | | | | | 60,00 | % | |
| | **Relative Feuchte in rel** | | | | | 87,90 | % | |
| | **H₂-Ausbeute der elektrochemischen Membran** | | | | | 75 | % | |
| | **H₂-Gesamtausbeute** | | | | | 96,01 | % | |
| | **Spezifischer Energieverbrauch** | | | | | 0,96 | **kWh/m³** | |

**Tabelle 4 - Membranflächen und Volumenströme der Beispiele 1 bis 3**

| | **Beispiel 1** | **Beispiel 2** | **Beispiel 3** |
|---|---|---|---|
| **Flächen in m²** | | | |
| A(Mem_1) | 0,036 | 0,08 | 0,1 |
| A(Mem_2) | 0,02125 | 0,017 | 0,17 |
| A(Mem_3) | 0,000085 | 0,000085 | 0,000085 |
| | | | |

| **Flächen bezogen auf A(Mem_1) aus Beispiel 1** | | | |
|---|---|---|---|
| A(Mem_1) | 100,0% | 222,2% | 277,8% |
| A(Mem_2) | 59,0% | 47,2% | 472,2% |
| A(Mem_3) | 0,2% | 0,2% | 0,2% |
| | | | |

| **Flächenverhältnis** | | | |
|---|---|---|---|
| A(Mem_2)/A(Mem_1) | 0,59 | 0,21 | 1,70 |
| A(Mem_3)/A(Mem_1) | 0,0024 | 0,0011 | 0,0009 |
| | | | |

| **Normvolumenströme in m³/h** | | | |
|---|---|---|---|
| f1 | 0,73 | 0,73 | 0,73 |
| p1 | 0,04 | 0,07 | 0,08 |
| prod | 0,02 | 0,03 | 0,03 |

Wie aus Tabelle 4 hervorgeht wurde, wie bereits erwähnt, als Ausgangsfeed f1 ein sehr schwacher Volumenstrom von nur 0,73 m³/h angenommen, wie er beispielsweise für eine kleine Wasserstoff-Tankstelle eines privaten Haushalts ausreichend wäre.

Nachstehender Tabelle 5 sind hingegen die entsprechenden Werte für erfindungsgemäße Beispiele 4 bis 6 zu entnehmen, bei denen als Ausgangsfeed f1 ein 1000-mal stärkerer Volumenstrom von 725 m³/h sowie jeweils 1000-fach vergrößerte Membranflächen für die Membranen der drei Gasmembranstrennstufen Mem_1, Mem_2 und Mem_3 angenommen wurden. Diese Ausführungsformen der Erfindung sind beispielsweise für eine großtechnische Anlage zur Wasserstoffreinigung aus einem verunreinigten Erdgasstrom oder für eine öffentliche Wasserstoff-Tankstelle repräsentativ.

**Tabelle 5 - Membranflächen und Volumenströme der Beispiele 4 bis 6**

| | **Beispiel 4** | **Beispiel 5** | **Beispiel 6** |
|---|---|---|---|
| **Flächen in m²** | | | |
| A(Mem_1) | 36,00 | 80,00 | 100,00 |
| A(Mem_2) | 21,25 | 17,00 | 170,00 |
| A(Mem_3) | 0,085 | 0,085 | 0,085 |
| | | | |

| **Flächen bezogen auf A(Mem_1) aus Beispiel 4** | | | |
|---|---|---|---|
| A(Mem_1) | 100,0% | 222,2% | 277,8% |
| A(Mem_2) | 59,0% | 47,2% | 472,2% |
| A(Mem_3) | 0,2% | 0,2% | 0,2% |
| | | | |

| **Flächenverhältnis** | | | |
|---|---|---|---|
| A(Mem_2)/A(Mem_1) | 0,59 | 0,21 | 1,70 |
| A(Mem_3)/A(Mem_1) | 0,0024 | 0,0011 | 0,0009 |
| | | | |

| **Normvolumenströme in m³/h** | | | |
|---|---|---|---|
| f1 | 725,76 | 725,76 | 725,76 |
| p1 | 38,45 | 67,00 | 77,96 |
| prod | 20,46 | 26,94 | 27,87 |

Für diese Beispiele 4 bis 6 erhöhen sich selbstredend auch die Stoffmengen in den jeweiligen Strömen sowie der Wasserbedarf in den Tabellen 1 bis 3 jeweils um den Faktor 1000. Die übrigen, relativen Werte wie etwa die Stoffmengenanteile und vor allem auch der jeweilige volumenbezogene Energiebedarf bleiben hingegen gleich, so dass in Beispiel 6, wie zuvor im analogen Beispiel 3, Wasserstoff mit der höchsten Ausbeute von über 96 % abgetrennt werden kann - und das mit einem gegenüber den Beispielen mit geringerer Fläche der ersten Trennmembran Mem_1 (Beispiele 1 und 2 bzw. Beispiele 4 und 5) nur relativ geringfügig erhöhtem Energiebedarf.

In den obigen Beispielen wird jedenfalls gezeigt, dass je nach Prozessauslegung eine unterschiedliche Gesamtausbeute bei unterschiedlichem Energieverbrauch erreicht werden kann. Die im Erdgasnetz eventuell vorhandene Feuchtigkeit permeiert bevorzugt durch die erste Membrantrennstufe Mem_1. Da das Wasser schlussendlich nur noch in Spuren im Produkt und Offgas enthalten sein soll, muss es ausgeschleust werden. Dies zeigt sich im negativen Wasserbedarf. Allerdings ist für einen stabilen Betrieb eine gewisse Menge an zirkulierendem Wasser erforderlich. Die Höhe dieser Zirkulationsmenge hängt von der Prozessauslegungsform und der Gesamtausbeute ab. Aus den Beispielen ist erkennbar, dass mehr Feuchtigkeit benötigt wird, um eine höhere Gesamtausbeute zu erreichen.

Die obigen computersimulierten Beispiele belegen somit klar, dass durch das Verfahren der vorliegenden Erfindung ein Strom aus praktisch reinem Wasserstoff, d.h. zu > 99,9 % reines H₂, da der Stoffmengenanteil x an H₂ im Produkt-Strom prod gerundet 1,00 beträgt, aus einem städtischen Erdgasnetz abgezweigt werden kann, während gleichzeitig Methan mit einer Reinheit von bis zu 99,9 % wieder in das Netz einspeisbar ist, wie aus den Stoffmengenanteilen x an CH₄ im Strom off von 0,988, 0,997 und 0,998 hervorgeht.

Eine derartig hohe Trenneffizienz und Reinheit der getrennten Gsströme ist nach dem Stand der Technik nicht erzielbar.

## Patentansprüche

1. Verfahren zur Abtrennung und Verdichtung von Wasserstoff aus H₂-hältigen Gasgemischen unter Verwendung von Membrantrennverfahren,
**dadurch gekennzeichnet, dass**
a) das H₂-hältige Gasgemisch (f1) zunächst in an sich bekannter Weise zumindest einem Membrantrennschritt unter Verwendung zumindest einer H₂-selektiven Polymermembran (Mem_1, Mem_2) unterzogen wird, wobei zumindest ein an H₂ angereichertes Permeat (p1, p2) erhalten wird;
b) das so erhaltene Permeat (p1, p2) anschließend bis zu einem definierten Feuchtigkeitsgrad befeuchtet wird;
c) das befeuchtete Gasgemisch (fel) danach einem Trennschritt mittels einer Protonen-transportierenden elektrochemischen Membran (Mem_el) unter gleichzeitiger Druckerhöhung unterzogen wird, um ein im Wesentlichen nur H₂ und H₂O umfassendes Permeat (pel) zu erhalten; und
d) dieses Permeat (pel) zumindest einem Trocknungsschritt, ausgewählt aus Kondensation (Kond 1) und Membrantrocknung (Mem_3) unterzogen wird, um einen im Wesentlichen reinen Wasserstoff umfassenden Gasstrom (prod) zu erhalten.

2. Verfahren nach Anspruch 1, **dadurch gekennzeichnet, dass** das H₂-hältige Gasgemisch (f1) in Schritt a) zumindest zum Teil zwei Membrantrennschritten unter Verwendung zweier H₂-selektiver Polymermembranen (Mem_1, Mem_2) unterzogen wird, wobei zumindest ein Teil des Permeats (p1) der ersten Membran (Mem_1) als Feed (s2) einer zweiten Membran (Mem_2) zugeführt wird und das Permeat (p2) des zweiten Trennschritts dem Befeuchtungsschritt zugeführt wird.

3. Verfahren nach Anspruch 1 oder 2, **dadurch gekennzeichnet, dass** das Permeat (pel) des elektrochemischen Membrantrennschritts c) sowohl einer Trocknung mittels Kondensator (Kond_1) als auch mittels einer dritten, H₂O-selektiven Membran (Mem_3) unterzogen wird.

4. Verfahren nach einem der Ansprüche 1 bis 3, **dadurch gekennzeichnet, dass** in Schritt a) als H₂-selektive Polymermembranen (Mem_1, Mem_2) aromatische Polyimidmembranen eingesetzt werden.

5. Verfahren nach einem der Ansprüche 1 bis 4, **dadurch gekennzeichnet, dass** in Schritt c) als Protonen-transportierende elektrochemische Membran (Mem_el) eine Nafion-Membran eingesetzt wird.

6. Verfahren nach einem der Ansprüche 1 bis 5, **dadurch gekennzeichnet, dass** in Schritt c) in der Protonen-transportierenden elektrochemischen Membran (Mem_el) ein Edelmetall-Katalysator eingesetzt wird.

7. Verfahren nach Anspruch 6, **dadurch gekennzeichnet, dass** ein Platin-Katalysator eingesetzt wird.

8. Verfahren nach einem der Ansprüche 1 bis 7, **dadurch gekennzeichnet, dass** in Schritt b) das Gasgemisch bis zu einem Feuchtigkeitsgrad befeuchtet wird, der zumindest 40 % der relativen Feuchte bei der jeweiligen Temperatur des Gasgemischs entspricht.

9. Verfahren nach Anspruch 8, **dadurch gekennzeichnet, dass** das Gasgemisch auf zumindest 50 % r. F. befeuchtet wird.

10. Verfahren nach Anspruch 9, **dadurch gekennzeichnet, dass** das Gasgemisch auf zumindest 60 % r. F. befeuchtet wird.

11. Verfahren nach Anspruch 10, **dadurch gekennzeichnet, dass** das Gasgemisch auf nicht mehr als 95 % r. F. befeuchtet wird.

12. Verfahren nach einem der Ansprüche 1 bis 11, **dadurch gekennzeichnet, dass** das im Trocknungsschritt d) abgetrennte Wasser zum Befeuchtungsschritt b) rezykliert wird.

## Claims

1. A method for separating and compacting hydrogen from H₂-containing gas mixtures by the application of membrane separation methods,
**characterized in that**
a) the H₂-containing gas mixture (f1) is initially subjected to a membrane separation step using at least one H₂-selective polymer membrane (Mem_1, Mem_2) in a well-known manner, resulting in at least one H₂-enriched permeate (p1, p2);
b) the permeate (p1, p2) thus obtained is subsequently humidified to a defined humidity level;
c) the humidified gas mixture (fel) is then subjected to a separation step by means of a proton-transporting electrochemical membrane (Mem_el) while simultaneously increasing the pressure in order to obtain a permeate (pel) containing essentially only H₂ and H₂O; and
d) this permeate (pel) is subjected to at least one drying step selected from condensation (Kond 1) and membrane drying (Mem_3) in order to obtain a gas stream (prod) comprising essentially pure hydrogen.

2. The method according to claim 1, **characterized in that** the H₂-containing gas mixture (f1) in step a) is at least partially subjected to two membrane separation steps by the use of two H₂-selective polymer membranes (Mem_1, Mem_2), wherein at least a part of the permeate (p1) of the first membrane (Mem_1) is supplied as a feed (s2) to a second membrane (Mem_2) and the permeate (p2) of the second separation step is supplied to the humidification step.

3. The method according to claim 1 or 2, **characterized in that** the permeate (pel) of the electrochemical membrane separation step c) is subjected to drying both by means of a condenser (Kond_1) and by means of a third H₂O-selective membrane (Mem_3).

4. The method according to any one of the claims 1 to 3, **characterized in that**, in step a), aromatic polyimide membranes are used as said H₂-selective polymer membranes (Mem_1, Mem_2).

5. The method according to any one of the claims 1 to 4, **characterized in that**, in step c), a Nafion membrane is used as said proton-transporting electrochemical membrane (Mem_el).

6. The method according to any one of the claims 1 to 5, **characterized in that**, in step c), a precious metal catalyst is used in said proton-transporting electrochemical membrane (Mem_el).

7. The method according to claim 6, **characterized in that** a platinum catalyst is used.

8. The method according to any one of the claims 1 to 7, **characterized in that**, in step b), the gas mixture is humidified to a humidity level corresponding to at least 40% of the relative humidity at the respective temperature of the gas mixture.

9. The method according to claim 8, **characterized in that** the gas mixture is humidified to at least 50% RH.

10. The method according to claim 9, **characterized in that** the gas mixture is humidified to at least 60% RH.

11. The method according to claim 10, **characterized in that** the gas mixture is humidified to not more than 95% RH.

12. The method according to any one of the claims 1 to 11, **characterized in that** the water separated in the drying step d) is recycled to the humidification step b).

## Revendications

1. Procédé pour la séparation et compression d'hydrogène à partir de mélanges gazeux contenant de l'H₂,
**caractérisé en ce que** :
a) le mélange gazeux contenant de l'H2 (f1) est initialement soumis de façon connue à une étape de séparation par membrane moyennant au moins une membrane sélective pour H₂ (Mem_1, Mem_2), permettant d'obtenir au moins un perméat (p1, p2) enrichi en H₂ ;
b) le perméat (p1, p2) ainsi obtenu est ensuite humidifié jusqu'à atteindre un degré d'humidité défini ;
c) le mélange gazeux humidifié (fel) est, après cela, soumis à une étape de séparation moyennant une membrane électrochimique transportant des protons (Mem_el) simultanément à une augmentation de pression, permettant d'obtenir un perméat (pel) contenant essentiellement uniquement de l'H2 et de l'H₂O ; et
d) ledit perméat (pel) est soumis au moins à une étape de séchage, choisi parmi condensation (Kond 1) et séchage par membrane (Mem_3), permettant d'obtenir un courant gazeux (prod) contenant de l'H2 essentiellement pur.

2. Procédé selon la revendication 1, **caractérisé en ce que** dans l'étape a) le mélange gazeux (f1) contenant de l'H2 est soumis au moins partiellement à deux étapes de séparation par membrane moyennant deux membranes polymériques sélectives pour H₂ (Mem_1, Mem_2), au moins une partie du perméat (p1) de la première membrane (Mem_1) étant amenée en tant qu'apport (s2) à la deuxième membrane (Mem_2) et le perméat (p2) issu de la deuxième étape de séparation étant amené à l'étape d'humidification.

3. Procédé selon l'une des revendications 1 ou 2, **caractérisé en ce que** le perméat (pel) issu de l'étape c) de séparation par membrane électrochimique est soumis à séchage tant par un condensateur (Kond_1) que par une troisième membrane sélective pour H₂ (Mem_3).

4. Procédé selon l'une quelconque des revendications 1 à 3, **caractérisé en ce que** dans l'étape a) des membranes aromatiques de polyimide sont utilisées comme membranes sélectives pour H₂ (Mem_1, Mem_2).

5. Procédé selon l'une quelconque des revendications 1 à 4, **caractérisé en ce que** dans l'étape c) une membrane en Nafion est utilisée comme membrane électrochimique transportant des protons (Mem_el).

6. Procédé selon l'une quelconque des revendications 1 à 5, **caractérisé en ce que** dans étape c) un catalyseur en métal précieux est utilisé dans la membrane électrochimique transportant des protons (Mem_el).

7. Procédé selon la revendication 6, **caractérisé en ce qu'**un catalyseur en platine est utilisé.

8. Procédé selon l'une quelconque des revendications 1 à 7, **caractérisé en ce que** dans l'étape b) le mélange gazeux est humidifié jusqu'à atteindre un degré d'humidité correspondant à au moins 40 % de l'humidité relative de la température respective du mélange gazeux.

9. Procédé selon la revendication 8, **caractérisé en ce que** le mélange gazeux est humidifié jusqu'à atteindre au moins 50 % h.r.

10. Procédé selon la revendication 9, **caractérisé en ce que** le mélange gazeux est humidifié jusqu'à atteindre au moins 60 % h.r.

11. Procédé selon la revendication 10, **caractérisé en ce que** le mélange gazeux est humidifié jusqu'à atteindre au plus 95 % h.r.

12. Procédé selon l'une quelconque des revendications 1 à 11, **caractérisé en ce que** l'eau séparée dans l'étape d) est recyclée pour l'étape b).
